# EUROPÄISCHE PATENTANMELDUNG

(11) **EP 1 739 957 A1**
(43) Veröffentlichungstag der Anmeldung: **03.01.2007**
(21) Anmeldenummer: 06405254.1
(22) Anmeldetag: 08.06.2006
(51) Int. Cl.: H04N 5/222

(54) **System und Verfahren zur Aufnahme und Wiedergabe von Bildern**

(30) Priorität: 28.06.2005 CH 10892005
(71) Anmelder: Dynaslice AG, 6340 Baar (CH)
(72) Erfinder: Steiner, Reinhard, 9552 Bronschhofen (CH)
(74) Vertreter: Rottmann, Maximilian

(57) **Zusammenfassung**

Ein System zur Aufnahme und Wiedergabe von Bildern von Objekten (O) nach dem Timeslice-Verfahren weist eine Kameraanordnung (K) mit mehreren Kameras (K1,K2, ...,Kn), die jeweils gleichzeitig Bilder wenigstens eines Objekts (O) aufnehmen; eine Speichereinrichtung (S) zum Speichern aller aufgenommenen Bilder; eine Anzeigeanordnung (A) zum Anzeigen aufgenommener Bilder; und eine Steuerung (C) zum Steuern der Kameraanordnung, der Speichereinrichtung (S) und der Anzeigeanordnung (A) auf, wobei die mehreren Kameras (K1,K2, ...,Kn) jeweils Videokameras hoher Geschwindigkeit und hoher Auflösung sind, die jeweils geeignet sind, eine große Anzahl von Bildern pro Sekunde aufzunehmen, die alle in der Speichereinrichtung (S) gespeichert werden und dann in beliebiger Reihenfolge aus der Speichereinrichtung (S) ausgelesen werden können, um Filmsequenzen zu erzeugen, die auf der weiteren Anzeigeeinheit (Ag) angezeigt werden können.
Ein zugehöriges Verfahren weist die entsprechende Schritte auf.

## Beschreibung

Die Erfindung betrifft allgemein ein System und ein Verfahren zur Aufnahme und Wiedergabe von Bildern, und zwar vorzugsweise zum Einsatz bei der Produktion von Filmen. Genauer gesagt betrifft die Erfindung ein System und ein Verfahren zur Aufnahme und Wiedergabe von Bildern nach dem Timeslice-Verfahren, gemäß welchem Bilder, die zu wenigstens zwei unterschiedlichen Bilddatenströmen gehören, aufgenommen und wiedergegeben werden. Ein solches System und ein solches Verfahren sind beispielsweise aus der WO 96/019892 bekannt, in der ein Gerät beschrieben ist, das eine Anordnung von Videokameras verwendet, die in der Lage sind, eine Vielzahl fotografischer Bilder einer Szene aus einer Vielzahl von Stellungen heraus gleichzeitig und synchron in schneller zeitlicher Ablauffolge aufzuzeichnen. Ein Anwender kann dann zur Wiedergabe irgendeine gewünschte Abfolge von Bildern aus der Anordnung der aufgezeichneten Bilder wählen, was dann aneinandergereiht in einer Filmsequenz zu besonderen Effekten führen kann.

Weitere solche Systeme sind aus der WO 02/096096 und der WO 03/041411 bekannt. Die WO 96/096096 zeigt ein System mit mehreren Einzelfoto- oder Videokameras, wobei durch diese Kameras aufgenommene Bilder gespeichert werden, um sie derart zu bearbeiten, dass bestimmte Echtzeiteffekte erzielt werden. Die WO 03/041411 zeigt ein Videosystem mit mehreren fernbedienten Videokameras, wobei mit diesen Kameras aufgenommene Bilder gespeichert werden, um die Bilder dann von unterschiedlichen Perspektiven aus anschauen zu können.

Durch das gleichzeitige Aufnehmen und Aufzeichnen von Szenen oder sich bewegenden Objekten durch mehrere Kameras, die an verschiedenen Stellen angeordnet sind und jeweils eine Vielzahl von Bildern pro Sekunde aufnehmen, und das nachfolgende Auswählen von aufgezeichneten Bildern zum Kombinieren von diesen ist das Bewegen einer Kamera zum Erzielen von Bewegung zeigenden Bildern nicht mehr nötig. Zudem können durch spezielles Auswählen und Kombinieren von aufgezeichneten Bildern auf einfache Weise spezielle Effekte, wie Zeitlupe, beschleunigte Darstellung, etc. erzielt werden.

Trotz aller schon bestehenden Vorteile des beschriebenen Standes der Technik, sind Systeme zur Aufnahme und Wiedergabe von Bildern unter Verwendung des oben angegebenen so genannten Timeslice-Verfahrens aufwendig zu bedienen. Weiterhin ist es wünschenswert, die Effekte, die mit einem System und einem Verfahren, wie sie aus dem Stand der Technik bekannt sind, zu verfeinern und zu verbessern.

Es ist somit eine Aufgabe der Erfindung, die Bedienbarkeit eines Systems zur Aufnahme und Wiedergabe von Bildern, wie es beispielsweise aus WO 96/019892 bekannt ist, zu vereinfachen. Weiterhin soll ein entsprechendes Verfahren verbessert werden.

Diese Aufgabe wird erfindungsgemäß durch das im Anspruch 1 angegebene System und das im Anspruch 15 angegebene Verfahren gelöst. Die jeweiligen abhängigen Ansprüche 2 bis 14 und 16 bis 22 zeigen spezielle Ausführungsformen des System gemäß Anspruch 1 bzw. des Verfahrens gemäß Anspruch 15.

Bei dem erfindungsgemäßen System ist insbesondere eine Steuerung zum Steuern der Kameraanordnung, der Speichereinrichtung und der Anzeigeanordnung vorgesehen.

Durch die Steuerung wird beispielsweise die Kalibrierung und/oder Synchronisierung vor einem Einsatz des Systems durchgeführt. Weiterhin werden die Kameras bezüglich ihrer Aufnahmepositionen an der Trägeranordnung, ihrer Synchronisation zueinander in Bezug auf ihre Aufnahmepositionen und ihre Aufnahmeoperationen und ihrer Bildausgabeoperationen gesteuert. Die Anzeigeeinheiten werden bezüglich ihrer Anzeigeoperationen gesteuert. Bei der Speichereinrichtung werden Speicheroperationen in Bezug auf durch die Kameraanordnung aufgenommene Bilder und in Bezug auf durch die Anzeigeanordnung angezeigte Bilder gesteuert. Zur Speicherung der großen Vielzahl von pro Sekunde aufgenommenen Bildern können zusätzlich oder alternativ mehrere Speichereinrichtungen entsprechend der Anzahl der mehreren Kameras vorgesehen sein. Bei einer Auswahl von Bildern zur Erzeugung von Filmsequenzen kann mittels der Steuerung eine grobe Vorauswahl automatisch durchgeführt werden.

Durch die Steuerung kann somit erreicht werden, dass jeweilige Operationen von Kameraanordnung und Anzeigeanordnung und Speichereinrichtung und/oder mehreren Speichereinrichtungen synchronisiert sind. Es wird eine Kontrolle von gemachten Aufnahmen noch während einer Aufzeichnung möglich. Durch die vorgesehene Steuerung wird auch die Bedienung des gesamten Systems erleichtert.

Bei dem erfindungsgemäßen Verfahren kann eine Auswahl von Bildern aus angezeigten und/oder gespeicherten Bildern erfolgen, so dass sowohl eine Auswahl direkt während einer Aufzeichnung oder auch erst später erfolgen kann. Dadurch wird die Flexibilität für einen Bediener erhöht.

Insbesondere wird durch die Erfindung die Bedienbarkeit des Systems verbessert und sind durch den Einsatz von vielen hochwertigen Aufnahmegeräten bzw. Kameras, von Speichern mit höchster Speicherkapazität, von vielen Anzeigeeinheiten und durch eine Steuerung, durch welche alle Komponenten des Systems gesteuert werden können, beste Spezialeffekte für einen Film erzielbar, ohne dass ein Bediener mit der Bedienung des Systems überfordert werden könnte.

Die angegebenen und weitere Merkmale und Einzelheiten der Erfindung werden einem Fachmann auf dem Gebiet aus der folgenden detaillierten Beschreibung und der beigefügten Zeichnung klarer, die Merkmale der vorliegenden Erfindung anhand eines Beispiels darstellt und wobei:
- Fig. 1: ein allgemeines Blockschaltbild eines Systems gemäß einer bevorzugten Ausführungsform zeigt;
- Fig. 2a: Kameras einer Kameraanordnung mit jeweiligen Speichereinrichtungen des Systems der Fig. 1 zeigt;
- Fig. 2b: Anzeigeeinheiten einer Anzeigeanordnung des Systems der Fig. 1 zeigt; und
- Fig. 3: ein System gemäß einer bevorzugten Ausführungsform im Einsatz zeigt.

Im Folgenden wird die vorliegende Erfindung anhand einer bevorzugten Ausführungsform unter Bezugnahme auf die beigefügte Zeichnung detailliert erklärt.

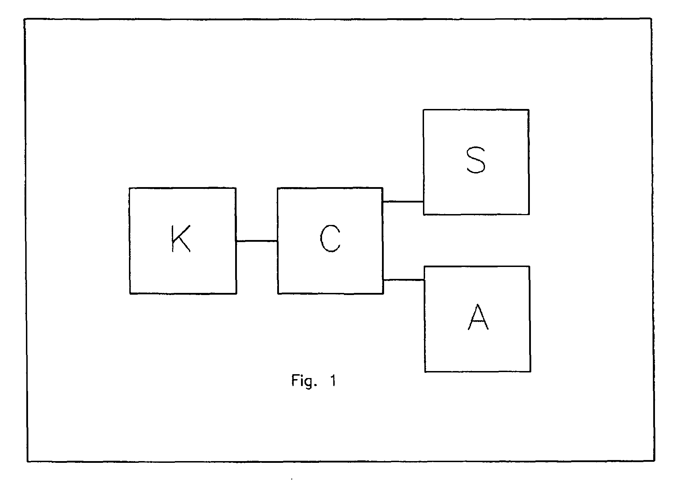

Fig. 1 zeigt ein Blockschaltbild einer bevorzugten Ausführungsform des erfindungsgemäßen Systems, das eine Kameraanordnung K, eine Anzeigeanordnung A, eine Speichereinrichtung S und eine Steuerung C aufweist. Die Steuerung C ist mit der Kameraanordnung K, der Anzeigeanordnung A und der Speichereinrichtung S verbunden, um diese zu steuern. Dies erfolgt durch eine Signalausgabe von der Steuerung C in Richtung zu der Kameraanordnung K, der Anzeigeanordnung A und/oder der Speichereinrichtung S und, zur Feststellung von Zuständen der gesteuerten Komponenten, auch durch eine Signaleingabe in die Steuerung C von der Kameraanordnung K, der Anzeigeanordnung A und/oder der Speichereinrichtung S. Weiterhin kann die Steuerung C eine Eingabeeinrichtung aufweisen, mittels welcher ein Bediener die Steuerung C einstellen und bedienen kann, um dadurch dann die Kameraanordnung K, die Anzeigeanordnung A und/oder die Speichereinrichtung S zu bedienen. Die Speichereinrichtung S ist vorzugsweise eine Festplatte mit hoher Speicherkapazität. Weiterhin können, wie es detaillierter in Fig. 2a gezeigt ist, mehrere als RAM ausgebildete Speichereinrichtungen S1, S2, ..., Sn vorgesehen sein, die ein Zwischenspeichern von aufgenommenen Bildern ermöglichen. Die Anzahl der mehreren Speichereinrichtungen S1, S2, ..., Sn entspricht vorzugsweise der Anzahl von Kameras und die Speichereinrichtungen S1, S2, ..., Sn können direkt an der jeweiligen Kamera positioniert sein. Diese Möglichkeit eines Zwischenspeicherns ist insbesondere dann notwendig, wenn der Daten-Durchsatz für aufgenommene Bilder von den Kameras zu dem der Speichereinrichtung zu hoch wird, um eine zufrieden stellende Übertragung über Kabellängen entsprechend der Entfernung von einer jeweiligen Kamera bis hin zu der Speichereinrichtung S zu erreichen Die Steuerung C ist beispielsweise aus mehreren Clusterrechnern ausgebildet.

Die Fig. 2a zeigt die Kameraanordnung K mit mehreren Kameras K1, K2, ..., Kn. Weiterhin sind in Fig. 2a den Kameras K1, K2, ..., Kn zugeordnete Speichereinrichtungen S1, S2, ..., Sn gezeigt. Die Kameras K1, K2, ..., Kn sind flexibel angeordnet gezeigt. Jedoch sollte eine Kamera, wie K1, in Bezug zu einer benachbarten Kamera, wie K2, derart angeordnet sein, dass die jeweiligen Aufnahmewinkel der Kameras in der Kameraanordnung keine Lücken haben. Gemäß einer bevorzugten Ausführungsform sind wenigstens 10 Kameras vorgesehen. Vorzugsweise sind 100 Kameras vorgesehen. Alle Kameras sind vorzugsweise professionelle Videokameras hoher Geschwindigkeit und hoher Auflösung, die jeweils dazu geeignet sind, eine große Anzahl von Bildern pro Sekunde aufzunehmen, die alle in der Speichereinrichtung S gespeichert werden und eventuell in den Speichereinrichtungen S1, S2, ..., Sn zwischengespeichert werden und dann in beliebiger Reihenfolge aus der Speichereinrichtung S ausgelesen werden können, um Filmsequenzen zu erzeugen.

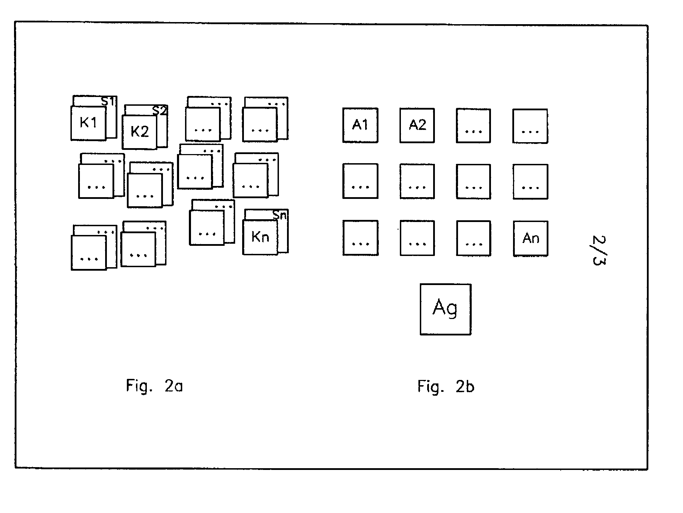

Die Fig. 2b zeigt die Anzeigeanordnung A mit mehreren Anzeigeeinheiten A1, A2, ..., An, die vorzugsweise in Matrixform angeordnet sind und deren Anzahl vorzugsweise der Anzahl von Kameras K1, K2, ..., Kn entspricht, damit jedes von einer Kamera K1, K2, ..., Kn aufgenommene Bild direkt während der Aufzeichnung auf einer entsprechenden Anzeigeeinheit A1, A2, ..., An angezeigt werden kann. Weiterhin ist in Fig. 2b eine zusätzliche Anzeigeeinheit Ag gezeigt, die insbesondere zur Anzeige von aus gespeicherten und/oder angezeigten Bildern ausgewählten Bildern und erzeugten Filmsequenzen dient.

Die durch die Kameras K1, K2, ..., Kn der Fig. 2a aufgenommenen Bilder werden, gesteuert durch die Steuerung C, während der Aufzeichnung auf den Anzeigeeinheiten A1, A2, ..., An der Fig. 2b angezeigt. Dabei können die Bilddaten von den Kameras K1, K2, ..., Kn über die Steuerung C zu den Anzeigeeinheiten A1, A2, ..., An geführt werden, wie es in Fig. 1 gezeigt ist, oder auch, gesteuert durch die Steuerung C, von den Kameras K1, K2, ..., Kn direkt zu den Anzeigeeinheiten A1, A2, ..., An geführt werden, was in den Figuren nicht gezeigt ist.

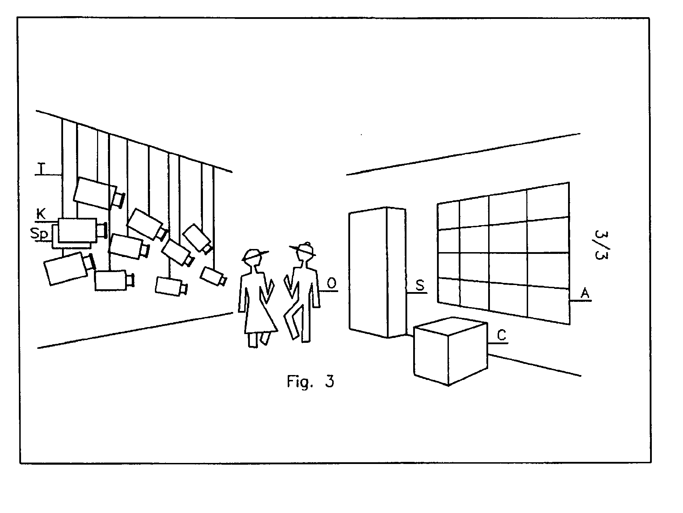

Im Folgenden wird eine Ausführungsform des erfindungsgemäßen Gesamtsystems unter Bezugnahme auf Fig. 3 detaillierter erklärt. Anhand der Fig. 3 wird auch auf das erfindungsgemäße Verfahren eingegangen.

Die Fig. 3 zeigt eine Kameraanordnung K mit mehreren Kameras, eine Anzeigeeinheit A mit mehreren Anzeigeeinheiten, eine Speichereinrichtung S und eine Steuerung C, wie es schon aus der Fig. 1 bekannt ist. Weiterhin ist die Möglichkeit eines Vorsehens von mehreren Speichereinrichtungen Sp entsprechend den mehreren Kameras angedeutet.

Zusätzlich zeigt die Fig. 3 noch eine Trägeranordnung T und ein aufzunehmendes Objekt O.

Die Trägeranordnung T, an welcher die Kameras der Kameraanordnung bevorzugt frei beweglich aufgehängt werden, ist vorzugsweise ein einfach montierbares Tragwerk, damit es auf einfache Weise von einem Einsatzort zu einem anderen transportiert und dort auf- und abgebaut werden kann. Besonderes bevorzugt besteht die Trägeranordnung aus einfach zu montierenden modularen Traversen. Die Kameras sind vorzugsweise mittels Kardangelenken an der Trägeranordnung beweglich und somit um drei Achsen einstellbar gelagert. Eine Bewegung der Kameras kann durch die Steuerung C gesteuert werden.

Die Steuerung C steuert somit die Kameras der Kameraanordnung K bezüglich ihrer Aufnahmepositionen an der Trägeranordnung T. Weiterhin steuert die Steuerung C die Synchronisation der Kameras zueinander in Bezug auf ihre Aufnahmepositionen und ihre Aufnahmeoperationen und ihre Bildausgabeoperationen zur Ausgabe von Bildern zur Anzeige auf der Anzeigeanordnung A. In diesem Zusammenhang steuert die Steuerung C auch die Anzeigeeinheiten der Anzeigeanordnung A bezüglich ihrer Anzeigeoperationen.

Zusätzlich steuert die Steuerung C auch die Speichereinrichtung S bezüglich ihrer Speicheroperationen in Bezug auf durch die Kameraanordnung K aufgenommene Bilder und in Bezug auf durch die Anzeigeanordnung A angezeigte Bilder. Die Speicheroperationen sind dabei Schreib- und/oder Leseoperationen sowie Speichermanagementoperationen. Alle diese Steuerungen können, insbesondere nach einer Voreinstellung durch einen Bediener, automatisch erfolgen, können aber auch durch spezielle Eingaben durch einen Bediener erfolgen.

Nachdem eine Kalibrierung und/oder eine Synchronisation des gesamten Systems und insbesondere der Kameras K1, K2, ..., Kn der Fig. 2a und/oder von Anzeigeeinheiten A1, A2, ..., An, Ag der Fig. 2b mittels der Steuerung C durchgeführt wurde, kann das System durch gleichzeitiges Aufnehmen von Bildern des Objekts O mit mehreren Kameras der Kameraanordnung K betrieben werden, wobei in Fig. 3 gut die Ausrichtung der Kameras in Richtung zu dem Objekt O zu sehen ist. Es ist klar, dass über die Steuerung C auch einzelne Kameras ausgewählt werden können, die nicht an dem gleichzeitigen Aufnehmen beteiligt sind. Die gleichzeitig aufgenommenen Bilder können während der Aufzeichnung auf den Anzeigeeinheiten der Anzeigeanordnung angezeigt werden. Weiterhin erfolgt ein Einlesen der aufgenommenen Bilder in die Speichereinrichtung S. Dann kann ein Auswählen von gewünschten Bildern aus den gespeicherten und/oder angezeigten Bildern erfolgen, wobei ausgewählte Bilder vorzugsweise auf der in Fig. 2b gezeigten speziellen Anzeigeeinheit Ag angezeigt werden, um sie von den anderen angezeigten Bildern auf einen Blick unterscheiden zu können.

Weil, vor allem aufgrund der Verwendung von Videokameras hoher Geschwindigkeit und hoher Auflösung, in der Speichereinrichtung S eine große Anzahl an aufgenommenen Bildern gespeichert ist und zur Weiterverarbeitung zur Verfügung steht, können mittels der Steuerung C beispielsweise Filmsequenzen erzeugt werden, die für einen Betrachter, der die Filmsequenzen derart ansieht, dass sie durch eine einzige Kamera aufgenommen sind, so wirken, als ob die Bewegungsgeschwindigkeit der Kamera völlig unabhängig von der Bewegungsgeschwindigkeit des Objekts ist.

Weiterhin können die ausgewählten Bilder vor einem Kombinieren zu Filmsequenzen noch einer Bildbearbeitung unterzogen werden, wenn dies erwünscht oder erforderlich ist. Die ausgewählten Bilder, die einer Bildbearbeitung unterzogenen Bilder und/oder die einer Kombination unterzogenen Bilder können in der Speichereinrichtung S gespeichert werden.

Gemäß der erfindungsgemäßen Ausgestaltung eines System zur Aufnahme und Wiedergabe von Bildern können folgende Vorteile erzielt werden:

Durch Vorsehen der erfindungsgemäßen Steuerung wird die Bedienung des Systems vereinfacht.

Durch Einsetzen hochwertiger Einzelteile im System wird die Funktion des Systems verbessert. Insbesondere soll die Anzahl von aufgenommenen Bildern pro Sekunde erhöht werden, so dass der Effekt einer Loslösung der Bewegungsgeschwindigkeit der Kamera von der Bewegungsgeschwindigkeit des Objekts für einen Betrachter eines Films verbessert wird. Ein bevorzugtes Ziel sind 10000 Bilder/Sekunde.

Durch den Einsatz von sehr vielen Kameras, wie beispielsweise von 100 Kameras, können bessere Effekte erzielt werden.

Durch das Speichern von sehr vielen aufgenommenen Bildern kann eine Nachbearbeitung der Bilder in bislang unbekanntem Ausmaß erfolgen.

Durch die Möglichkeit eines Anzeigens aller aufgenommenen Bilder während einer Aufzeichnung kann die Aufzeichnung direkt kontrolliert werden.

Durch eine Befestigung von Kameras an der Trägeranordnung über Kardangelenke können die Kameras flexibel bewegt werden, was mittels der Steuerung auch während einer Aufnahme erfolgen kann. Die Trägeranordnung selbst ist bei einer Ausführung als modulare Traversen einfach montierbar.

Die Kameras und auch die Objektive sind durch die Steuerung automatisch ansteuerbar.

Insgesamt werden durch die vorliegende Erfindung ein System und ein Verfahren zur Aufnahme und Wiedergabe von Bildern zur Verfügung gestellt, welche durch ihre vielen optimalen Eigenschaften und Verbesserungen im Vergleich mit dem Stand der Technik einen Beitrag dazu leisten können, die Produktion von Filmen zu vereinfachen und interessante Effekte in Filmen zu erzeugen.

## Patentansprüche

1. System zur Aufnahme und Wiedergabe von Bildern von Objekten nach dem Timeslice-Verfahren, wobei das System folgendes aufweist:
eine Kameraanordnung (K) mit mehreren Kameras (K1, K2, ..., Kn), die jeweils gleichzeitig Bilder wenigstens eines Objekts (O) aufnehmen;
eine Speichereinrichtung (S) zum Speichern aller aufgenommenen Bilder;
eine Anzeigeanordnung (A) zum Anzeigen aufgenommener Bilder; und
eine Steuerung (C) zum Steuern der Kameraanordnung (K), der Speichereinrichtung (S) und der Anzeigeanordnung (A),
wobei die mehreren Kameras (K1, K2, ..., Kn) jeweils Videokameras hoher Geschwindigkeit und hoher Auflösung sind, die jeweils geeignet sind, eine große Anzahl von Bildern pro Sekunde aufzunehmen, die alle in der Speichereinrichtung (S) gespeichert werden und dann in beliebiger Reihenfolge aus der Speichereinrichtung (S) ausgelesen werden können, um Filmsequenzen zu erzeugen.

2. System nach Anspruch 1, **dadurch gekennzeichnet, dass** die Speichereinrichtung mehrere Speichereinrichtungen (S1, S2, ..., Sn) (RAM, usw) aufweist, deren Anzahl derjenigen der mehreren Kameras (K1, K2, ..., Kn) entspricht.

3. System nach Anspruch 1 oder 2, **dadurch gekennzeichnet, dass** die Anzeigeanordnung (A) mehrere Anzeigeeinheiten (A1, A2, ..., An, Ag) aufweist.

4. System nach Anspruch 3, **dadurch gekennzeichnet, dass** die Anzahl der mehreren Anzeigeeinheiten (A1, A2, ..., An) der Anzahl der mehreren Kameras (K1, K2, ..., Kn) entspricht, so dass jeweils mit einer Kamera (K1, K2, ..., Kn) aufgenommene Bilder auf einer entsprechenden Anzeigeeinheit (A1, A2, ..., An) angezeigt werden.

5. System nach Anspruch 4, **dadurch gekennzeichnet, dass** eine weitere Anzeigeeinheit (Ag) zur Anzeige eines aus den aufgenommenen Bildern ausgewählten Bildes oder von erzeugten Filmsequenzen vorgesehen ist, wobei die Steuerung (C) in Bezug auf die Auswahl von Bildern eine grobe Vorauswahl automatisch durchführen kann.

6. System nach einem der Ansprüche 2 bis 5, **dadurch gekennzeichnet, dass** aufgrund der in der Speichereinrichtung (S) und/oder den mehreren Speichereinrichtungen (S1, S2, ..., Sn) gespeicherten und zur Weiterverarbeitung zur Verfügung stehenden großen Vielzahl an aufgenommenen Bildern die Möglichkeit besteht, mittels der Steuerung (C) Filmsequenzen zu erzeugen, die für einen Betrachter, der die Filmsequenzen derart ansieht, dass sie durch eine einzige Kamera aufgenommen sind, so wirken, als ob die Bewegungsgeschwindigkeit der Kamera völlig unabhängig von der Bewegungsgeschwindigkeit des Objekts ist.

7. System nach einem der vorangehenden Ansprüche, **dadurch gekennzeichnet, dass** die Speichereinrichtung (S) eine Festplatte mit hoher Speicherkapazität ist, oder auch andere Solid-State-Speicherlösungen sowie künftige magnetische/optische Speicherlösungen bis hin zu Quanten-Speicherlösungen

8. System nach einem der vorangehenden Ansprüche, **dadurch gekennzeichnet, dass** die mehreren Kameras (K1, K2, ..., Kn) der Kameraanordnung (K) frei beweglich an einer Trägeranordnung (T) angeordnet sind.

9. System nach Anspruch 8, **dadurch gekennzeichnet, dass** die Trägeranordnung (T) ein montierbares Tragwerk ist.

10. System nach einem der vorangehenden Ansprüche, **dadurch gekennzeichnet, dass** die Steuerung (C) die Kameras (K1, K2, ..., Kn) bezüglich ihrer Aufnahmepositionen an der Trägeranordnung (T), ihrer Synchronisation zueinander in Bezug auf ihre Aufnahmepositionen und ihre Aufnahmeoperationen und ihrer Bildausgabeoperationen steuert.

11. System nach einem der Ansprüche 2 bis 10, **dadurch gekennzeichnet, dass** die Steuerung (C) die Anzeigeeinheiten (A1, A2, ..., An, Ag) bezüglich ihrer Anzeigeoperationen steuert.

12. System nach einem der vorangehenden Ansprüche, **dadurch gekennzeichnet, dass** die Steuerung (C) die Speichereinrichtung (S) bezüglich ihrer Speicheroperationen in Bezug auf durch die Kameraanordnung (K) aufgenommene Bilder und in Bezug auf durch die Anzeigeanordnung (A) angezeigte Bilder steuert.

13. System nach Anspruch 12, **dadurch gekennzeichnet, dass** die Speicheroperationen Schreib- und/oder Leseoperationen sowie Speichermanagementoperationen sind.

14. System nach einem der vorangehenden Ansprüche, **dadurch gekennzeichnet, dass** die Steuerung (C) eine Eingabeeinrichtung aufweist, über welche ein Bediener die Steueroperationen einstellen kann.

15. Verfahren zur Aufnahme und Wiedergabe von Bildern von Objekten nach dem Timeslice-Verfahren, wobei das Verfahren die folgenden Schritte aufweist:
a) gleichzeitiges Aufnehmen von Bildern eines Objekts mit mehreren Kameras (K1, K2, ..., Kn) einer Kameraanordnung (K), wobei die mehreren Kameras (K1, K2, ..., Kn) jeweils Videokameras hoher Geschwindigkeit und hoher Auflösung sind, die jeweils geeignet sind, eine große Anzahl von Bildern pro Sekunde aufzunehmen;
b) Speichern aller aufgenommenen Bilder in einer Speichereinrichtung (S) oder in mehreren Speichereinrichtungen (S1, S2, ..., Sn);
c) Anzeigen der aufgenommenen Bilder auf einer Anzeigeanordnung (A); und
d) Auswählen von gewünschten Bildern aus den gespeicherten und/oder angezeigten Bildern und Kombinieren der ausgewählten Bilder zu Filmsequenzen.

16. Verfahren nach Anspruch 15, **dadurch gekennzeichnet, dass** alle gleichzeitig aufgenommenen Bilder direkt bei ihrer Aufnahme auf jeweiligen Anzeigeeinheiten (A1, A2, ..., An) der Anzeigeanordnung (A) angezeigt werden.

17. Verfahren nach Anspruch 15 oder 16, **dadurch gekennzeichnet, dass** ausgewählte Bilder oder Filmsequenzen auf einer speziellen Anzeigeeinheit (Ag) der Anzeigeanordnung (A) angezeigt werden.

18. Verfahren nach einem der Ansprüche 15 bis 17, **dadurch gekennzeichnet, dass** die Schritte a) bis d) durch eine Steuerung (C) automatisch gesteuert und/oder durch einen Anwender manuell betätigt durchlaufen werden.

19. Verfahren nach einem der Ansprüche 15 bis 18, **dadurch gekennzeichnet, dass** vor einem Aufnehmen von Bildern eine Kalibrierung und/oder Synchronisierung der Kameras (K1, K2, ..., Kn) und/oder von Anzeigeeinheiten (A1, A2, ..., An, Ag) durchgeführt wird.

20. Verfahren nach einem der Ansprüche 15 bis 19, **dadurch gekennzeichnet, dass** die ausgewählten Bilder vor einem Kombinieren einer Bildbearbeitung unterzogen werden.

21. Verfahren nach einem der Ansprüche 15 bis 20, **dadurch gekennzeichnet, dass** die ausgewählten Bilder, die einer Bildbearbeitung unterzogenen Bilder und/oder die einer Kombination unterzogenen Bilder gespeichert werden.

22. Verfahren nach einem der Ansprüche 15 bis 21, **dadurch gekennzeichnet, dass** beim Auswählen und darauf folgenden Kombinieren der ausgewählten Bilder zu Filmsequenzen derartige Filmsequenzen erzeugt werden, die für einen Betrachter, der die Filmsequenzen derart ansieht, dass sie durch eine einzige Kamera aufgenommen sind, so wirken, als ob die Bewegungsgeschwindigkeit der Kamera völlig unabhängig von der Bewegungsgeschwindigkeit des Objekts ist.
